# EUROPÄISCHE PATENTANMELDUNG

(11) **EP 1 300 219 A2**
(43) Veröffentlichungstag der Anmeldung: **09.04.2003**
(21) Anmeldenummer: 02021147.0
(22) Anmeldetag: 24.09.2002
(51) Int. Cl.: B25J 9/00

(54) **Roboterkonsole**

(30) Priorität: 05.10.2001 DE 10149420
(71) Anmelder: F.EE GmbH Automation, 92431 Neunburg (DE)
(72) Erfinder: Fleischmann, Robert, 92431 Neunburg (DE)
(74) Vertreter: Bergmeier, Werner, Dipl.-Ing.

(57) **Zusammenfassung**

Eine Roboterkonsole weist eine Grundplatte (2), einen Abstandhalter (4) und eine Deckplatte (3) auf, wobei die Konsole (1) über die Grundplatte (2) am Boden und der Roboter an der Deckplatte (3) befestigt ist und der Abstandhalter (4) mit der Grundplatte (2) und der Deckplatte (3) verschweißt ist. Der Hohlraum zwischen Grundplatte (2), Abstandhalter (4) und Deckplatte (3) ist mit Ballast (15) gefüllt. Eine der Platten (2,3), insbesondere die Grundplatte (2) weist eine Aussparung auf, welche größer oder gleich der anderen Platte (3,2), insbesondere der Deckplatte (3) ist. Im Hohlraum sind Mittel (20,22,24) vorgesehen zur Einleitung von Kräften in den Ballast (15).

## Beschreibung

Die vorliegende Erfindung betrifft eine Roboterkonsole mit einer Grundplatte, einem Abstandhalter und einer Deckplatte, wobei die Konsole über die Grundplatte am Boden und der Roboter an der Deckplatte befestigt ist und der Abstandhalter mit der Grundplatte und der Deckplatte verschweißt ist. Der Hohlraum zwischen Grundplatte, Abstandhalter und Deckplatte ist mit Ballast gefüllt.

In automatisierten Fertigungen werden häufig Roboter eingesetzt. Um Kräfte und Drehmomente aufnehmen zu können, sind die Roboter mittelbar oder unmittelbar am Boden befestigt. Die Befestigung geschieht üblicherweise mittels Schrauben und Dübel, welche im Hallenboden verankert sind. Um eine erhöhte Arbeitsposition des Roboters zu erreichen sind häufig Konsolen vorgesehen, auf welchen die Roboter befestigt werden. Durch diese erhöhte Arbeitsposition wird der Arbeitsbereich des Roboters erweitert. Bekannte Roboterkonsolen bestehen beispielsweise aus Beton oder aus Schweißkonstruktionen. Eine derartige Schweißkonstruktion ist beispielsweise aus der DE 200 05 708 U1 bekannt. Die Grundplatte besteht hierbei aus einem Ring, auf welchem ein Abstandhalter befestigt ist. Auf dem Abstandhalter wiederum liegt die Deckplatte auf welcher der Roboter steht. Durch eine besondere Anordnung von Bohrungen in der Grundplatte wurde die Festigkeit der Konsole hinsichtlich ihrer Verankerung im Boden wesentlich erhöht. Nachteilig bei der gezeigten Ausführung ist es allerdings, daß die Herstellkosten für diese Konsole sehr hoch sind, um die auf die Konsole einwirkenden dynamischen Kräfte durch den Roboter aufnehmen zu können.

Aus der DE 200 05 707 U1 ist eine Roboterkonsole bekannt, deren Distanzkörper mit Ballast gefüllt ist. Hierzu wurde auf einer durchgehenden Grundplatte ein Abstandhalter angeordnet und mit einer Deckplatte abgeschlossen. Der dadurch entstandene Hohlraum wurde mit Ballast ausgefüllt. Nachteilig bei dieser Roboterkonsole ist es ebenso wie bei der zuvor beschriebenen Roboterkonsole, daß ein hoher Materialaufwand erforderlich ist um die Roboterkonsole herzustellen.

Aufgabe der vorliegenden Erfindung ist es somit eine Roboterkonsole zu schaffen, welche einerseits kostengünstig in der Herstellung und andererseits sehr hohe, insbesondere dynamische Kräfte aufnehmen kann.

Die vorliegende Aufgabe wird gelöst mit einer Roboterkonsole gemäß den Merkmalen des Anspruchs 1.

Erfindungsgemäß ist die Grundplatte derart ausgebildet, daß sie eine Aussparung aufweist, welche größer oder gleich der Deckplatte ist. Es wird hierdurch bewirkt, daß eine relativ große Grundplatte zur Verfügung steht, über welche die Kräfte in den Hallenboden eingeleitet werden können. Darüber hinaus wird durch die Erfindung berücksichtigt, daß die Tragwirkung der Grundplatte im Bereich der Aussparung, welche insbesondere im Bereich des Zentrums der Grundplatte angeordnet ist, nicht wesentlich beiträgt zur Übertragung von Kräften.

Ist die Aussparung größer oder gleich der Deckplatte, so ist es in einer besonders vorteilhaften Ausführung der Erfindung möglich, daß das Material der Grundplatte, welches durch die Fertigung der Aussparung frei wird, für die Deckplatte verwendet wird. Hierdurch ist es nicht erforderlich, daß zwei großflächige Materialplatten bearbeitet werden müssen, welche jeweils einen großen Abfall verursachen oder Bereiche aufweisen, welche für die Funktion der einzelnen Platten nicht oder zumindest nicht wesentlich beitragen und somit nicht erforderlich sind.

Bei modernen Roboterkonsolen ist es erforderlich sehr hohe dynamische Kräfte aufnehmen zu können. Insbesondere bei Robotern, welche große Ausladungen und hohe Tragkräfte verbunden mit hohen Geschwindigkeiten aufweisen, wirken auf die Roboterkonsole sehr hohe dynamische Kräfte ein. Besonders bei Notstop-Situationen, bei welchen der Roboter innerhalb kürzester Zeit und Fahrwege zum Stillstand kommen muß, werden extrem hohe Drehmomente und dynamische Kräfte erzeugt, welche von der Roboterkonsole aufgenommen und in den Hallenboden geleitet werden müssen.

Um trotz der großen Materialeinsparung der vorliegenden Erfindung die Leistungsfähigkeit der Roboterkonsole weiter zu erhöhen, wird erfindungsgemäß vorgesehen, daß im Hohlraum Mittel vorgesehen sind zur Einleitung von Kräften in den Ballast.

Durch diese Krafteinleitungsmittel wird es ermöglicht, daß trotz der Aussparung in der Grundplatte sichergestellt wird, daß der Ballast voll zur Wirkung kommt. Kräfte und Drehmomente, welche aus dem Roboter in die Konsole und hier wiederum in den Hallenboden eingeleitet werden, werden durch den Ballast aufgefangen. Die Befestigung der Konsole mit Schrauben und Dübeln in dem Boden ist hierdurch weniger hoch belastet. Der Durchmesser der Roboterkonsole und/oder die Anzahl der Schraubdübelverbindungen kann hierdurch reduziert werden. Dies führt wiederum zu einer Kostenreduzierung, da einerseits weniger kostenintensive Schraubdübelverbindungen erforderlich sind und darüber hinaus ein geringerer Materialbedarf erforderlich ist. Durch den Ballast, welcher auf die Konsole wirkt, ist außerdem oder alternativ die Verwendung von leichteren Schraubdübeln möglich. Auch dies trägt zur Kostenreduzierung bei.

Als besonders kostengünstiger und einfach zu verarbeitender Ballast hat sich Beton erwiesen. Der Beton wird entweder während der Fertigung oder am Einsatzort der Roboterkonsole in die Roboterkonsole gegossen und dort zum Abbinden gebracht. Alternativ kann der Beton aus einzelnen Betonteilen bestehen, welche in der Konsole eingesetzt werden.

Besonders vorteilhaft ist es, wenn das Krafteinleitungsmittel die Grundplatte ist, wobei der Ballast auf einem Überstand der Grundplatte aufliegt. Der Überstand der Grundplatte ragt dabei ausgehend von dem Abstandhalter in den Hohlraum der Roboterkonsole hinein. Der Überstand wird besonders einfach dadurch erhalten, daß der Abstandhalter nicht bündig am inneren Umfang der Grundplatte angeschweißt wird, sondern mit einem gewissen Abstand von dem inneren Umfang. Hierdurch entsteht ein Vorsprung, auf welchem der Ballast aufliegt und somit bewirkt, daß die auf die Roboterkonsole einwirkenden Kräfte und Drehmomente in den Ballastkörper eingeleitet werden und somit die Kräfte auf die Konsolbefestigung reduzieren.

Ist das Krafteinleitungsmittel ein am Abstandhalter, der Grundplatte und/oder der Deckplatte angeordneter und in den Hohlraum ragender Betonanker, so wird auch hierdurch auf einfache Weise sichergestellt, daß die Kraft aus dem Roboter über die Konsole in den Beton des Ballastkörpers eingeleitet wird.

Ist das Krafteinleitungsmittel eine am Abstandhalter, der Grundplatte und/oder der Deckplatte angeordnete Hinterschneidung, so wird auch hierdurch die Kraft in die Grundplatte bzw. den Ballastkörper eingeleitet. Wesentlich ist, daß die Hinterschneidung derart ist, daß die Kraft aus der Roboterkonsole durch das Gewicht des Ballastes abgefangen wird und somit die eigentliche Schweißkonstruktion der Roboterkonsole leichter ausgeführt werden kann.

Sind die Grundplatte und die Deckplatte zueinander verdreht mit dem Abstandhalter verschweißt, so ergibt sich insbesondere bei einer nichtkreisförmigen Gestaltung der Aussparung die Möglichkeit der Kombination einzelner Schweißnähte innerhalb der Befestigung der Grundplatte bzw. der Befestigung der Deckplatte mit dem Abstandhalter. Es können hierbei überlappende und aufeinandergesetzte Stöße innerhalb einer Verbindung geschaffen werden.

Weist wenigstens eine der Schweißnähte zur Verbindung von Grundplatte, Abstandhalter und/oder Deckplatte eine Schweißnaht mit Schweißnahtvorbereitung auf, so wird eine sehr innige Verbindung zwischen der Schweißnaht und den zu verbindenden Bauteilen erhalten. Durch diese Maßnahme in Verbindung mit der Materialeinsparung im Bereich der Grundplatte und/oder Deckplatte und dem Ballast im Hohlraum der Konsole ist es möglich eine kostengünstige Roboterkonsole zu schaffen, welche darüber hinaus extrem leistungsfähig und herkömmlichen Roboterkonsolen weit überlegen ist.

Durch die Verwendung einer Schweißnaht mit Schweißnahtvorbereitung wird zudem ermöglicht, daß für die Abstandhalter Material verwendet wird, welches im Vergleich zu herkömmlichen Roboterkonsolen dünner ist und/oder Aussparungen aufweist und somit zusätzlich zur Materialeinsparung und Kostenreduzierung beiträgt. Entgegen der herrschenden Meinung, wonach für eine leistungsfähigere Roboterkonsole ein erhöhter Materialeinsatz erforderlich ist, wurde mit der vorliegenden Erfindung eine Roboterkonsole geschaffen, welche aufgrund eines deutlich geringeren Materialeinsatzes in Kombination mit ausgewählten Schweißverbindungen eine im Vergleich zu herkömmlichen Roboterkonsolen kostengünstiger und außerdem leistungsfähiger ist.

Ist die Aussparung größer oder gleich der Deckplatte, so ist es in einer besonders vorteilhaften Ausführung der Erfindung möglich, daß das Material der Grundplatte, welches durch die Fertigung der Aussparung frei wird, für die Deckplatte verwendet wird. Hierdurch ist es nicht erforderlich, daß zwei großflächige Materialplatten bearbeitet werden müssen, welche jeweils einen großen Abfall verursachen oder Bereiche aufweisen, welche für die Funktion der einzelnen Platten nicht oder zumindest nicht wesentlich beitragen und somit nicht erforderlich sind.

Gemäß einer Ausführung der Erfindung ist die Aussparung in der Deckplatte vorgesehen. Auch hier gibt es Bereiche, welche für die Befestigung des Roboters auf der Konsole und die Krafteinleitung aus dem Roboter in die Konsole nicht erforderlich ist. Auch hierbei handelt es sich meist um einen zentralen Bereich der Deckplatte. Material wird aus diesem Bereich der Deckplatte entnommen und wird für die Herstellung der Grundplatte verwendet. Hierbei ist es beispielsweise möglich, daß das Material aus der Aussparung zur Herstellung von mehreren Grundplatten verwendet wird, welche in Art von einzelnen Füßen mit dem Abstandhalter verbunden werden und somit eine mehrteilige Grundplatte bilden, über welche die Roboterkonsole mit dem Hallenboden beispielsweise über Dübel-Schraub-Verbindungen verbunden wird.

Sind Grundplatte und Deckplatte aus einem Teil gefertigt, so ist es möglich das Material, welches durch die Aussparung der einen Platte frei wird für die Herstellung der anderen Platte zu verwenden. Es entstehen hierbei Deckund Grundplatten mit jeweils gleicher Wandstärke. Auch wenn dies von der Kraftaufnahme nicht unbedingt erforderlich ist, so handelt es sich hierbei doch um eine besonders vorteilhafte Ausführung der Erfindung, da der Materialabfall deutlich reduziert wird, was wiederum zur Kostenreduzierung der kompletten Roboterkonsole beiträgt.

Als besonders vorteilhaft, da die Krafteinleitung besonders schonend für die Schweißverbindung und das Material erfolgen kann, ist es, wenn der Abstandhalter auf der Deckfläche einer der Platten, insbesondere der Grundplatte und an der Stirnfläche der anderen Platte, insbesondere der Deckplatte angeordnet ist. Durch diese Anordnung ist es möglich, daß die eine Platte, welche an sich aus dem Abfall, d.h. aus der Aussparung der einen Platte hergestellt wird, über eine sehr tragkräftige Schweißnaht mit dem Abstandhalter verbunden wird. Darüber hinaus ist auch durch die Anordnung des Abstandhalters auf der Deckfläche der anderen Platte eine große Schweißnaht erzeugbar.

Vorteilhafterweise ist die Schweißnahtvorbereitung zumindest an der Verbindung zwischen Abstandhalter und Grundplatte vorgesehen. In diesem Bereich sind höhere dynamische Kräfte als an der Verbindung zwischen Abstandhalter und Deckplatte zu erwarten. Es wird deshalb vorgesehen, daß die Schweißnaht mit der Schweißnahtvorbereitung vorzugsweise in diesem unteren Bereich erfolgt.

Zur Schweißnahtvorbereitung ist es besonders vorteilhaft, wenn die Grundplatte, die Deckplatte und/oder der Abstandhalter eine Fase aufweist. Durch die Fase erhält zumindest eine der Stoßflächen, an welchen die Schweißnaht angebracht wird, eine Abschrägung. Hierdurch ist die Verbindung der beiden Teile, insbesondere bei Einwirkung dynamischer Kräfte haltbarer ausgebildet als bei einer Schweißnaht ohne Schweißnahtvorbereitung, wie es beispielsweise bei einer einfachen Kehlnaht der Fall wäre.

Als besonders vorteilhafte Schweißnähte haben sich eine HV-, eine K- oder eine HY-Naht erwiesen. Es kann sich hierbei um durchgeschweißte, gegengeschweißte oder nicht-durchgeschweißte Nähte handeln. Wichtig ist dabei, daß die Schweißnähte auch bei sehr geringem Materialeinsatz von Deckplatte, Grundplatte und Abstandhalter sehr hohe dynamische Kräfte übertragen können.

Als besonders vorteilhaft hat sich erwiesen, wenn der Außenumfang der Deckplatte und der Innenumfang der Grundplatte rund ausgestaltet ist. Hierdurch ist eine gleichmäßige Kraftaufnahme bei geringem Materialeinsatz möglich.

Ist der Außenumfang der Deckplatte und der Innenumfang der Grundplatte ein Vieleck, so wird unter Umständen die Herstellung der Roboterkonsole erleichtert, da keine gebogenen Bauteile, insbesondere des Abstandhalters erforderlich sind. Allerdings ist hierfür ein höherer Materialeinsatz der Bauteile erforderlich.

Üblicherweise ist der Abstandhalter zylindrisch oder vieleckig. In einzelnen Ausbildungen der Erfindung ist es aber auch vorteilhaft, wenn der Abstandhalter konisch ausgebildet ist um beispielsweise einen größeren Unterschied zwischen dem Innenumfang der einen Platte und dem Außenumfang der anderen Platte auszugleichen oder eine größere Abstützung des Roboters zu erreichen.

Weitere Vorteile der Erfindung sind in den nachfolgenden Ausführungsbeispielen beschrieben. Es zeigt:
- **Figur 1**: eine Roboterkonsole in perspektivischer Ansicht,
- **Figur 2**: eine Verbindungsstelle, insbesondere zwischen Deckplatte und Abstandhalter,
- **Figur 3**: eine Verbindungsstelle, insbesondere zwischen Grundplatte und Abstandhalter
- **Figur 4-9**: verschiedene Verbindungen zwischen Abstandhalter, Grundplatte und Deckplatte
- **Figur 10**: eine weitere Roboterkonsole in perspektivischer Ansicht
- **Figur 11**: ein Ausschnitt der Verbindung zwischen Grundplatte und Abstandhalter
- **Figur 12**: verschiedene weitere Verbindungen zwischen Abstandhalter, Grundplatte und Deckplatte.

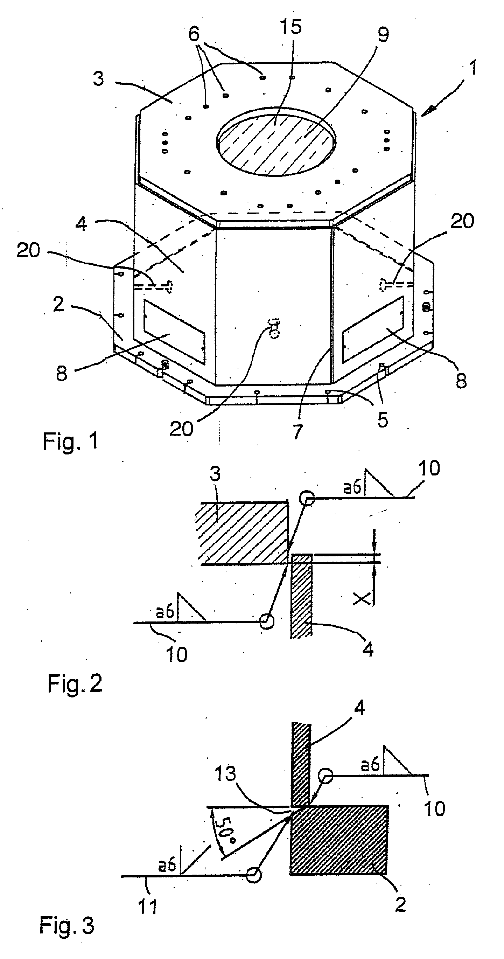

Figur 1 zeigt eine perspektivische Ansicht einer Roboterkonsole 1. Die Roboterkonsole 1 besteht im wesentlichen aus einer Grundplatte 2 und einer Deckplatte 3. Grundplatte 2 und Deckplatte 3 sind mit einem Abstandhalter 4 miteinander verbunden. Der Querschnitt der Roboterkonsole 1 ist in dem vorliegenden Ausführungsbeispiel achteckig. Die Grundplatte 2 ist, wie insbesondere aus der gestrichelten Darstellung zu entnehmen ist, ein achteckiger Ring, auf welchem der Abstandhalter 4 aufgesetzt ist. Das Innere dieses Rings ist flächenmäßig größer als die Deckplatte 3 ohne deren Aussparungen. Die Form der Deckplatte 3 entspricht im wesentlichen der Form der Aussparung der Grundplatte 2. Somit ist es möglich und in dem vorliegenden Ausführungsbeispiel ausgeführt, daß die Deckplatte 3 aus einem einzigen Stück zusammen mit der Grundplatte 2 herausgeschnitten oder herausgebrannt ist. Die Deckplatte 3 ist somit hinsichtlich ihres Umfangs um mindestens den Schnitt- oder Brennspalt kleiner als der innere Umfang der Grundplatte 2. Grundplatte 2 und Deckplatte 3 sind mit dem Abstandhalter 4 in später noch näher beschriebener Weise miteinander verbunden.

An der Grundplatte 2 sind Löcher 5 vorgesehen, über welche die Roboterkonsole 1 auf einem nicht dargestellten Hallenboden mittels Schrauben und Dübel befestigt wird. Die Deckplatte 3 weist Löcher 6 auf, an welchen der Roboter angeschraubt wird.

Der Abstandhalter 4 ist achteckig ausgebildet. In dem vorliegenden Ausführungsbeispiel besteht er aus mindesten einem, auf acht Flächen abgekanteten Blech, welches an den Stoßstellen mit einer herkömmlichen Schweißnaht 7 verschweißt ist.

In einzelnen der Flächen des Abstandhalters 4 sind Öffnungen 8 vorgesehen. Diese Öffnungen 8 ermöglichen einerseits die Zuführung von Kabeln in die Roboterkonsole 1 zur Energieversorgung des Roboters. Außerdem erleichtern sie Schweißarbeiten bei der Herstellung der Roboterkonsole 1. Ebenso weist die Deckplatte 3 eine Öffnung 9 auf. Auch durch diese Öffnung 9 können Energieleitungen für den Roboter geführt werden und Schweißarbeiten im Inneren der Roboterkonsole 1 durchgeführt werden.

In dem Hohlraum zwischen Grundplatte 2, Deckplatte 3 und Abstandhalter 4 befindet sich Ballast 15, hier als Beton dargestellt. Der Beton füllt den gesamten Hohlraum aus und beschwert damit die Roboterkonsole 1.

Durch das zusätzliche Gewicht, welches die Roboterkonsole 1 nunmehr aufweist, wird die Verwendung von einfacheren und leichteren Verbindungselementen der Konsole in den Hallenboden ermöglicht bzw. die Trägheit der Roboterkonsole 1 wird erhöht, wodurch die dynamischen Kräfte, welche von dem Roboter auf die Roboterkonsole 1 aufgebracht werden besser abgefangen werden können. Zur Krafteinleitung des Ballasts 15 in das Gehäuse der Roboterkonsole 1 sind Betonanker 20 vorgesehen. Die Betonanker 20 sind in dem vorliegenden Ausführungsbeispiel in dem Abstandhalter 4 angeordnet. Selbstverständlich können weitere oder ähnliche Betonanker auch in der Deckplatte 3 oder der Grundplatte 2 vorgesehen sein. Ebenfalls ist es möglich, daß an dem Abstandhalter 4, an der Deckplatte 3 oder der Grundplatte 2 Laschen angeschweißt sind, welche in den Hohlraum hineinragen und sich dort mit dem Beton 15 verankern oder zumindest den Beton 15 auf diesen Laschen aufliegen lassen. In allen diesen Fällen ist gewährleistet, daß die Roboterkonsole 1 beschwert ist und sie somit leistungsfähiger wird. In Verbindung damit, daß die Grundplatte 2 und die Deckplatte 3 in einer besonders vorteilhaften Ausführung der Erfindung aus einem Teil hergestellt sind, da die Aussparung der Grundplatte 2 größer ist als die Deckplatte 3, wird eine besonders kostengünstige und doch extrem leistungsfähige Roboterkonsole 1 erhalten.

In Figur 2 ist eine Verbindung der Deckplatte 3 mit dem Abstandhalter 4 dargestellt. Die Deckplatte 3 weist einen geringfügigen Abstand von dem Abstandhalter 4 auf, welcher im Bereich der Stirnfläche der Deckplatte 3 angeordnet ist. Dieser Abstand resultiert daraus, daß die Deckplatte 3 aus der Grundplatte 2 entstanden ist und durch den Schnitt- oder Brennspalt geringfügig kleiner als die Grundplatte 2 ist. Darüber hinaus sitzt der Abstandhalter 4 auf der Deckfläche der Grundplatte 2 auf bzw. ist bündig mit der Stirnfläche des Innenumfangs der Grundplatte 2. Zur Befestigung der Deckplatte 3 mit dem Abstandhalter 4 sind in dem vorliegenden Ausführungsbeispiel zwei Kehlnähte vorgesehen. Diese Kielnähte stellen eine Schweißnaht ohne Schweißnahtvorbereitung dar. Dadurch, daß der Abstandhalter sich an der Stirnfläche der dickeren Deckplatte 3 befindet, steht die komplette Wandstärke des Abstandhalters 4 für die Schweißnaht zur Verfügung. Es wird somit auch mit einer an sich schwächeren Kehlnaht hier eine für viele Anwendungsfälle ausreichende Befestigung der Deckplatte 3 an dem Abstandhalter 4 geschaffen.

Die Überlappung von Deckplatte 3 mit dem Abstandhalter 4 weist den Wert x auf. Dieser Wert x ist variabel und hängt insbesondere von den Anforderungen an die Roboterkonsole 1 ab. Der Wert x soll bei höheren Anforderungen zumindest so sein, daß die beiden Schweißnähte 10 jeweils volle Kraftübertragung entfalten können.

In Figur 3 ist die Verbindung zwischen dem Abstandhalter 4 und der Grundplatte 2 dargestellt. Der Abstandhalter 4 sitzt auf der Deckfläche der Grundplatte 2 auf. Die Kontaktfläche zwischen Abstandhalter 4 und Grundplatte 2 weist in der Grundplatte 2 eine Fase 13 auf. Die Fase 13, welche im vorliegenden Ausführungsbeispiel 50° beträgt stellt die Schweißnahtvorbereitung dar. Durch den Einsatz einer Schweißnaht 11 mit Schweißnahtvorbereitung an dieser Stelle wird eine besonders starke Verbindung zwischen dem Abstandhalter 4 und der Grundplatte 2 geschaffen. Insbesondere dynamische Kräfte sind hierdurch sehr zuverlässig in die Grundplatte 2 einleitbar. Die Schweißnaht 11 ist durch die Schweißnahtvorbereitung mittels der Fase 13 geeignet besonders hohe dynamische Kräfte aufzunehmen und zu übertragen. Die der Schweißnaht 11 gegenüberliegende Schweißnaht 10 weist in diesem Ausführungsbeispiel wiederum keine Schweißnahtvorbereitung auf. Sie besteht aus einer einfachen Kehlnaht. Aufgrund der Anordnung des Abstandhalters 4 auf der Deckfläche der Grundplatte 2 kann hier ebenfalls eine relativ große Kehlnaht angeordnet werden, welche die Schweißnaht 11 in der Kraftübertragung unterstützen kann.

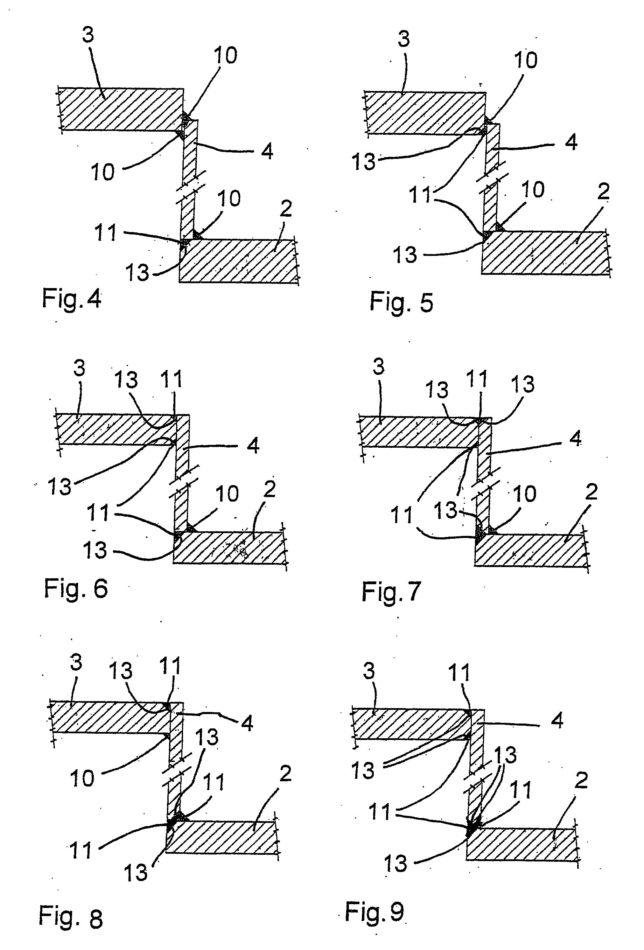

Die Figuren 4 bis 9 zeigen verschiedene Ausführungsbeispiele, wie die Grundplatte 2, die Deckplatte 3 und der Abstandhalter 4 miteinander verbunden sein können. Es ist jeweils der Innenumfang der Grundplatte 2 größer als der Außenumfang der Deckplatte 3. Der Abstandhalter 4 sitzt jeweils auf der Deckfläche der Grundplatte 2 auf und ist seitlich an der Stirnfläche der Deckplatte 3 angeordnet. In anderen Ausführungen der Erfindung können die gezeigten Verbindungen selbstverständlich auch miteinander ausgetauscht werden, d.h. eine im Bereich der Grundplatte gezeigte Verbindung kann auch im Bereich der Deckplatte eingesetzt werden und umgekehrt.

Figur 4 stellt im wesentlichen die Verbindung der Figuren 2 und 3 schematisch dar. Lediglich an der Stirnseite der Grundplatte 2 ist eine Schweißnahtvorbereitung mittels einer Fase 13 vorgesehen. An dieser Stelle ist eine Schweißnaht 11 mit Schweißnahtvorbereitung gesetzt. Die übrigen Schweißnähte sind Schweißnähte 10 ohne Vorbereitung, d.h. einfache Kehlnähte.

Figur 5 zeigt Schweißnähte 11 mit Schweißnahtvorbereitung an den beiden innen liegenden Verbindungsstellen. Dementsprechend weist auch die Stirnfläche der Deckplatte 3 eine Schweißnahtvorbereitung in Form einer Fase 13 auf. Die beiden außen liegenden Schweißnähte sind Schweißnähte 10 ohne Vorbereitung.

In Figur 6 sind drei der vier Schweißnähte mit einer Schweißnahtvorbereitung versehen. Es handelt sich hierbei wie bei Figur 5 um die beiden inneren Schweißnähte 11 sowie die äußere Schweißnaht 11 der Deckplatte 3. Der Wert x der Überlappung des Abstandhalters 4 bzgl. der Stirnfläche der Deckplatte 3 ist in diesem Ausführungsbeispiel derart, daß sie der Dicke der Deckplatte 3 entspricht. Durch diese große Überlappung wird eine besonders feste Verbindung, insbesondere zusammen mit den beiden Schweißnähten 11 von der Deckplatte 3 zum Abstandhalter 4 hin geschaffen.

Während in Figur 6 die Deckplatte 3 zwei Fasen 13 zur Schweißnahtvorbereitung aufweist, ist in Figur 7 zusätzlich auch der Abstandhalter 4 mit einer Fase 13 versehen. Hierdurch kann die äußere Schweißnaht zwischen Deckplatte 3 und Abstandhalter 4 als doppelte HV-Naht ausgebildet werden und eine zusätzliche Festigkeit erzeugen. Das Ausführungsbeispiel nach Figur 7 weist zusätzlich eine doppelte HV-Naht im Bereich des Übergangs von dem Abstandhalter 4 zur Grundplatte 2 hin auf. Dies bedeutet, daß der Abstandhalter 4 auch im Bereich des Stoßes zu der Deckfläche der Grundplatte 2 eine Fase 13 aufweist.

In Figur 8 erfolgt die Befestigung der Deckplatte 3 mit dem Abstandhalter 4 mit einer inneren Schweißnaht 10 ohne Vorbereitung und einer äußeren Schweißnaht 11 mit Vorbereitung. Die Verbindung zwischen Abstandhalter 4 und Grundplatte 2 weist im äußeren Bereich eine HV-Naht mit Kehlnaht auf. Hierzu ist die Stirnfläche des Abstandhalters 4 mit einer Fase 13 versehen. Eine Fase 13 ist auch an der Stoßstelle zwischen Abstandhalter 4 und Grundplatte 2 an der Grundplatte 2 vorgesehen.

In Figur 9 sind alle vier Schweißnähte 11 mit Schweißnahtvorbereitung versehen. Fasen 13 sind hierzu an der Stirnfläche der Deckplatte 3, der Stirnseite des Abstandhalters 4 im Bereich der Grundplatte 2 sowie an der Stirnfläche der Grundplatte 2 vorgesehen.

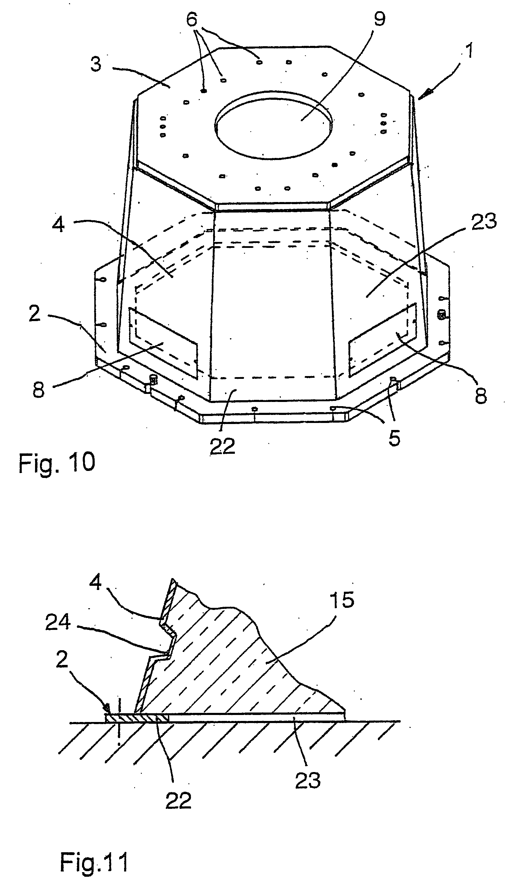

In Figur 10 ist eine weitere Roboterkonsole 1 in perspektivischer Ansicht gezeigt. Grundplatte 2 und Deckplatte 3 sind aus einem einzigen Blechteil gefertigt. Hierdurch entsteht in der Grundplatte 2 eine Aussparung 23, welche im wesentlichen der Form der Deckplatte 3 entspricht. Der Abstandhalter 4 verläuft ausgehend von der Grundplatte 2 konisch zur Deckplatte 3 hin. Der Abstandhalter 4 ist nicht bündig an einer Umfangslinie der Grundplatte 2 angeordnet, sondern etwa mittig auf der Deckfläche der Grundplatte 2 in zuvor beschriebener Weise angeschweißt. Hierdurch entsteht ein Überhang 22 der Grundplatte 2, welche in den Hohlraum zwischen Grundplatte 2, Deckplatte 3 und Abstandhalter 4 hineinragt. Auf diesem Überhang 22 stützt sich der Ballast 15, welcher sich in dem Hohlraum befindet, ab. Hierdurch wird eine zusätzliche Kraft auf die Grundplatte 2 ausgeübt, welche eine zusätzliche Stabilität der Roboterkonsole 1 bewirkt. Durch diese zusätzliche Stabilität und das auf der Roboterkonsole 1 lastende Gewicht des Ballastes 15 wird es ermöglicht, daß entweder leichtere und/oder weniger Schraubdübelverbindungen bei gleicher Lastaufnahme benötigt werden. Andererseits kann bei gleichen Schraubdübelverbindungen eine erhöhte Lastaufnahme möglich sein.

In Figur 11 ist ein Schnitt durch eine Roboterkonsole 1 im Bereich der Verbindung der Grundplatte 2 mit dem Abstandhalter 4 dargestellt. Es ist daraus zu ersehen, daß der Ballast 15 auf dem Überstand 22 der Grundplatte 2 aufliegt. Hierdurch wird das Gewicht des Ballastes 15, hier ein Betonkörper, auf die Grundplatte 2 aufgebracht, wodurch eine zusätzliche Stabilität der Roboterkonsole 1 erhalten wird. Der Ballast 15 kann entweder auch die Aussparung 23 ausfüllen oder, wie hier gezeigt, die Aussparung 23 freilassen. Die hier gezeigte Ausführung wird beispielsweise dadurch erhalten, daß beim Ausgießen der Roboterkonsole 1 die Aussparung 23 mittels Styroporeinlagen freigehalten wird, um eine Montage auf dem Hallenboden zu erleichtern.

Das in Figur 11 gezeigte Ausführungsbeispiel zeigt zusätzlich eine Hinterschneidung 24 in dem Abstandhalter 4. Durch die Hinterschneidung 24 wird zusätzlich eine Krafteinleitung des Ballastes 15 in die Roboterkonsole bewirkt. Die Verbindungsstelle zwischen Abstandhalter 4 und Grundplatte 2 wird hierdurch ebenfalls entlastet. Diese zusätzliche Maßnahme der Hinterschneidung 24 ist vorteilhaft bei besonders hoch beanspruchten Roboterkonsolen 1 oder wenn die Schweißverbindung zwischen Grundplatte 2 und Abstandhalter 4 weniger aufwendig ausgeführt werden soll. Selbstverständlich ist es aber für viele Anwendungen ausreichend, wenn entweder der Überstand 22 oder die Hinterschneidung 24 vorgesehen ist. Außerdem ist es möglich, daß der Überstand 22 nicht integrierter Bestandteil der Grundplatte 2 ist, sondern ganz oder teilweise entlang des inneren Umfangs der Grundplatte 2 angeschweißt ist.

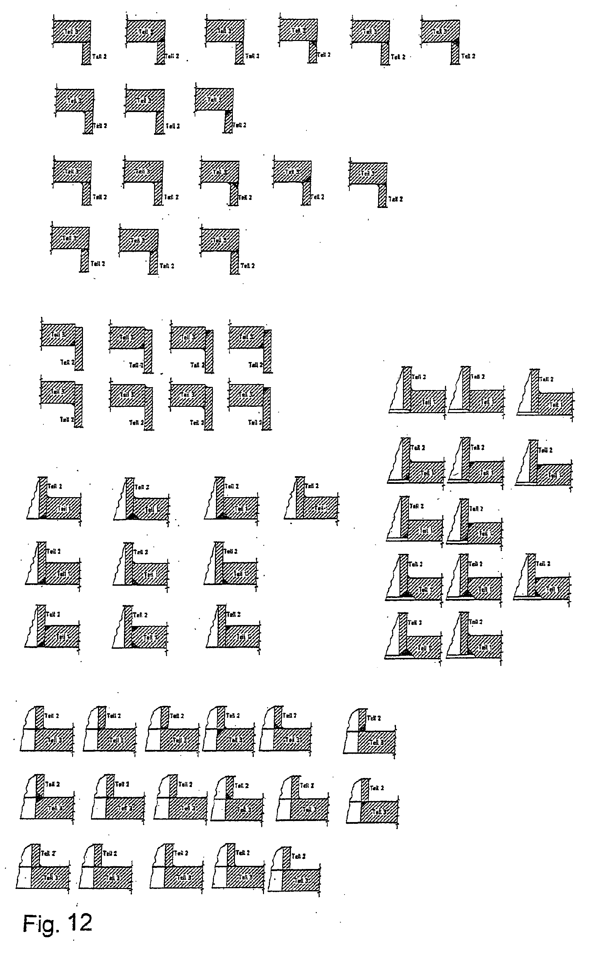

Selbstverständlich sind weitere Kombinationsmöglichkeiten von Schweißnähten mit und ohne Vorbereitung möglich. Solche weiteren Möglichkeiten sind in den Ausführungen der Figur 12 zu sehen. Als Teil 1 ist darin die Grundplatte 2, als Teil 2 der Abstandhalter 4 und als Teil 3 die Deckplatte 3 bezeichnet. Einsetzbar sind beispielsweise auch U-Nähte und Y-Nähte. Wesentlich ist bei dieser vorteilhaften Ausführung jedenfalls immer, daß zumindest eine der Schweißnähte mit Schweißnahtvorbereitung versehen ist und somit eine hohe dynamische Kraftaufnahme aufweist. Hierdurch ist es möglich, trotz Materialeinsparung eine sehr stabile Roboterkonsole, welche auch für moderne, leistungsstarke Roboter geeignet ist, herzustellen.

Die vorliegende Erfindung ist nicht auf die dargestellten Ausführungsbeispiele beschränkt. Insbesondere auch der Abstandhalter kann unterschiedlich zu dem dargestellten Ausführungsbeispielen ausgebildet sein. Es sind runde Formen ebenso möglich wie eine konische Ausbildung des Abstandhalters. Die seitliche Überlappung des Abstandhalters im Bezug auf die Deckplatte, wie sie in den vorliegenden Ausführungsbeispielen dargestellt wurde kann auch im Bereich der Grundplatte erfolgen. In diesem Falle sind zwei Kontaktstellen an den zwei Stirnseiten von Grundplatte und Deckplatte zu dem Abstandhalter vorhanden. Weiterhin ist im Rahmen der Erfindung, wenn die Deckplatte auf dem Abstandhalter aufliegt und der Abstandhalter selbst an der Stirnfläche der Grundplatte angeordnet ist. Dies entspricht einem Austausch von Grundplatte mit Deckplatte in den oben beschriebenen Ausführungsbeispielen.

## Patentansprüche

1. Roboterkonsole mit einer Grundplatte (2), einem Abstandhalter (4) und einer Deckplatte (3), wobei die Konsole (1) über die Grundplatte (2) am Boden und der Roboter an der Deckplatte (3) befestigt ist und der Abstandhalter (4) mit der Grundplatte (2) und der Deckplatte (3) verschweißt ist und der Hohlraum zwischen Grundplatte (2), Abstandhalter (4) und Deckplatte (3) mit Ballast (15) gefüllt ist, **dadurch gekennzeichnet, daß** eine der Platten (2,3), insbesondere die Grundplatte (2) eine Aussparung aufweist, welche größer oder gleich der anderen Platte (3,2), insbesondere der Deckplatte (3) ist, und daß im Hohlraum Mittel (20,22,24) vorgesehen sind zur Einleitung von Kräften in den Ballast (15).

2. Roboterkonsole nach Anspruch 1, **dadurch gekennzeichnet, daß** der Ballast (15) Beton ist.

3. Roboterkonsole nach einem oder mehreren der vorherigen Ansprüche, **dadurch gekennzeichnet, daß** das Krafteinleitungsmittel die Grundplatte (2) ist, wobei der Ballast auf einem Überstand (22) der Grundplatte (2) aufliegt, der ausgehend von dem Abstandhalter (4) in den Hohlraum ragt.

4. Roboterkonsole nach einem oder mehreren der vorherigen Ansprüche, **dadurch gekennzeichnet, daß** das Krafteinleitungsmittel ein am Abstandhalter (4), der Grundplatte (2) und/oder der Deckplatte (3) angeordneter und in den Hohlraum ragender Betonanker (20) ist.

5. Roboterkonsole nach einem oder mehreren der vorherigen Ansprüche, **dadurch gekennzeichnet, daß** das Krafteinleitungsmittel eine am Abstandhalter (4), der Grundplatte (2) und/oder der Deckplatte (3) angeordnete Hinterschneidung (24) ist, welche die Kraft in den Ballast (15) einleitet.

6. Roboterkonsole nach einem oder mehreren der vorherigen Ansprüche, **dadurch gekennzeichnet, daß** Grundplatte (2) und Deckplatte (3) aus einem Teil gefertigt sind.

7. Roboterkonsole nach einem oder mehreren der vorherigen Ansprüche, **dadurch gekennzeichnet, daß** Grundplatte (2) und Deckplatte (3) zueinander verdreht mit dem Abstandhalter (4) verschweißt sind.

8. Roboterkonsole nach einem oder mehreren der vorherigen Ansprüche, **dadurch gekennzeichnet, daß** der Abstandhalter (4) auf der Deckfläche einer der Platten (2,3), insbesondere der Grundplatte (2) und an der Stirnfläche der anderen Platte (3,2), insbesondere der Deckplatte (3) angeordnet ist.

9. Roboterkonsole nach einem oder mehreren der vorherigen Ansprüche, **dadurch gekennzeichnet, daß** wenigstens eine der Schweißnähte zur Verbindung von Grundplatte (2), Abstandhalter (4) und/oder Deckplatte (3) eine Schweißnaht (11) mit Schweißnahtvorbereitung ist.

10. Roboterkonsole nach einem oder mehreren der vorherigen Ansprüche, **dadurch gekennzeichnet, daß** die Schweißnahtvorbereitung zumindest an der Verbindung zwischen Abstandhalter (4) und Grundplatte (2) vorgesehen ist.

11. Roboterkonsole nach einem oder mehreren der vorherigen Ansprüche, **dadurch gekennzeichnet, daß** zur Schweißnahtvorbereitung die Grundplatte (2), die Deckplatte (3) und/oder der Abstandhalter (4) eine Fase (13) aufweist.

12. Roboterkonsole nach einem oder mehreren der vorherigen Ansprüche, **dadurch gekennzeichnet, daß** die Schweißnaht (11) eine HV- oder eine HY-Naht ist.

13. Roboterkonsole nach einem oder mehreren der vorherigen Ansprüche, **dadurch gekennzeichnet, daß** der Außenumfang der Deckplatte (3) und der Innenumfang der Grundplatte (2) rund ist.

14. Roboterkonsole nach einem oder mehreren der vorherigen Ansprüche, **dadurch gekennzeichnet, daß** der Außenumfang der Deckplatte (3) und der Innenumfang der Grundplatte (2) ein Vieleck, insbesondere mit abgerundeten Ecken ist.

15. Roboterkonsole nach einem oder mehreren der vorherigen Ansprüche, **dadurch gekennzeichnet, daß** der Abstandhalter (4) zylindrisch, konisch, vieleckig oder wellig ist.
